# EUROPEAN PATENT APPLICATION

(11) **EP 4 657 556 A1**
(43) Date of publication of application: **03.12.2025**
(21) Application number: 23922329.0
(22) Date of filing: 17.10.2023
(51) Int. Cl.: H01M 4/36, H01M 4/58, H01M 10/054

(54) **POSITIVE ELECTRODE ACTIVE MATERIAL, PREPARATION METHOD THEREFOR, POSITIVE ELECTRODE SHEET, SECONDARY BATTERY AND ELECTRICAL APPARATUS**

(30) Priority: 16.02.2023 CN 202310128853
(71) Applicant: Contemporary Amperex Technology (Hong Kong) Limited, Hong Kong (HK)
(72) Inventor: YANG, Huiling, Ningde, Fujian 352100 (CN); QIN, Meng, Ningde, Fujian 352100 (CN); XU, Yue, Ningde, Fujian 352100 (CN); GUAN, Yingjie, Ningde, Fujian 352100 (CN); WEN, Yan, Ningde, Fujian 352100 (CN); HUANG, Qisen, Ningde, Fujian 352100 (CN)
(74) Representative: Gong, Jinping
(86) International application number: PCT/CN2023/124968
(87) International publication number: WO 2024/169212

(57) **Abstract**

A positive electrode active material and a preparation method therefor, a positive electrode plate, a secondary battery, and a power consuming apparatus are disclosed. The positive electrode active material is a polyanionic compound/carbon composite, and the positive electrode active material has the following general formula: Na₄₋ₓR_{3-y}M_{z}(PO₄)₂P₂O₇/C, where R includes at least one of Mg, Al, Sc, Ti, V, Cr, Mn, Fe, Co, Ni, Cu, Zn, Zr, Nb, Mo, Sn, Hf, Ta, W, and Pb, M includes at least one of Mg, Al, Sc, Ti, V, Cr, Mn, Fe, Co, Ni, Cu, Zn, Zr, Nb, Mo, Sn, Hf, Ta, Si, W, and Pb, 0≤x≤0.5, 0≤y≤0.5, 0≤z<x+y, and x and y are not both 0.

## Description

### CROSS-REFERENCE TO RELATED APPLICATIONS

This application claims priority to Chinese Patent Application No. 202310128853.2, filed on Feb. 16, 2023 and entitled "POSITIVE ELECTRODE ACTIVE MATERIAL AND PREPARATION METHOD THEREFOR, POSITIVE ELECTRODE PLATE, SECONDARY BATTERY, AND POWER CONSUMING APPARATUS", which is incorporated herein by reference in its entirety.

### TECHNICAL FIELD

This application relates to the technical field of secondary batteries, and in particular, to a positive electrode active material and a preparation method therefor, a positive electrode plate, a secondary battery, and a power consuming apparatus.

### BACKGROUND

Sodium batteries have a large potential of application in large-scale energy storage due to abundant reserves, low costs, and wide working temperature.

The performance of the positive electrode active material plays a key role in the performance of the battery. At present, the performance of the positive electrode active material cannot meet the requirements during use of the new generation of electrochemical systems.

### SUMMARY

In view of the foregoing problems, this application is accomplished. An object of this application is to provide a positive electrode active material. The positive electrode active material has a low content of residual alkali, to improve the processability of the positive electrode active material and optimizing the Coulombic efficiency and cycling performance of a battery.

A first aspect of this application provides a positive electrode active material. The positive electrode active material is a polyanionic compound/carbon composite, and the positive electrode active material has the following general formula:

Na₄₋ₓR_{3-y}M_{z}(PO₄)₂P₂O₇/C

where R includes at least one of Mg, Al, Sc, Ti, V, Cr, Mn, Fe, Co, Ni, Cu, Zn, Zr, Nb, Mo, Sn, Hf, Ta, W, and Pb, M includes at least one of Mg, Al, Sc, Ti, V, Cr, Mn, Fe, Co, Ni, Cu, Zn, Zr, Nb, Mo, Sn, Hf, Ta, Si, W, and Pb, 0≤x≤0.5, 0≤y≤0.5, 0≤z<x+y, and x and y are not both 0.

The positive electrode active material can provide a Na vacancy or an R metal vacancy, where R includes at least one of Mg, Al, Sc, Ti, V, Cr, Mn, Fe, Co, Ni, Cu, Zn, Zr, Nb, Mo, Sn, Hf, Ta, W, and Pb.

The existence of the vacancy changes the chemical bond distortion between other elements in the positive electrode active material, widens the diffusion channel of Na ions, effectively promotes the migration of Na ions, inhibits or reduces the formation of residual alkali in the positive electrode active material, and reduces the electrode plate resistance of the positive electrode plate. Moreover, the optimized Na ion diffusion channel can also improve the electrical conductivity of the positive electrode active material. In addition, doping with a metal including at least one of Mg, Al, Sc, Ti, V, Cr, Mn, Fe, Co, Ni, Cu, Zn, Zr, Nb, Mo, Sn, Hf, Ta, W, and Pb can affect the structural change of the positive electrode active material, expand the interplanar gap, accelerate the migration of Na ions, and further improve the cycling performance of the battery and improve the performance of the battery.

In any embodiment, 0≤x≤0.5, and optionally 0.01 ≤ x≤0.2.

The Na vacancy provided in the positive electrode active material can effectively promote the migration of Na ions and inhibit or reduce the formation of residual alkali in the positive electrode active material. For one thing, the existence of Na vacancy can improve the valence state of other metals in the positive electrode active material, enhance the oxidation resistance of the positive electrode active material, inhibit or reduce the reaction between the positive electrode active material and water, reduce the content of residual alkali in the positive electrode active material, and reduce the electrode plate resistance of the positive electrode plate. For another, the optimized Na ion migration path can improve the dynamic performance of the positive electrode active material, improve the Coulombic efficiency and cycling performance of the battery, and improve the electrical performance of the battery. By further controlling 0.01≤x≤0.2, the content of residual alkali in the positive electrode active material and the electrode plate resistance of the positive electrode plate are further reduced.

In any embodiment, 0<y-z≤0.3.

The positive electrode active material provides an R metal vacancy, where R includes at least one of Mg, Al, Sc, Ti, V, Cr, Mn, Fe, Co, Ni, Cu, Zn, Zr, Nb, Mo, Sn, Hf, Ta, W, and Pb. For one thing, the R metal vacancy distorts chemical bonds between other elements in the positive electrode active material, to widen the diffusion channel of Na ions, improve the transport speed of Na ions during charging and discharging, and improve the electrical conductivity of the positive electrode active material, thereby improving the Coulombic efficiency and cycling performance of the battery. For another, the R metal vacancy can also change the electron cloud distribution in elements such as P and O, thereby improving the conductivity of the positive electrode active material and improving the cycling performance of the battery.

In any embodiment, 0<x≤0.5 and 0<z≤y≤0.5.

On the basis of the positive electrode active material providing a Na vacancy, the positive electrode active material is further doped with at least one of Mg, Al, Sc, Ti, V, Cr, Mn, Fe, Co, Ni, Cu, Zn, Zr, Nb, Mo, Sn, Hf, Ta, Si, W, and Pb. The doping metal occupies an R metal vacancy, which can affect the structural change of the positive electrode active material, expand the interplanar gap, accelerate the migration of Na ions, and further improve the electrical conductivity of the positive electrode active material, thereby improving the cycling performance of the battery.

In any embodiment, R includes one or more of Fe, Co, Ni, and Mn; and M includes one or more of Mg, Al, Sc, Ti, V, Cr, Mn, Si, and Co.

All of the above-mentioned metal materials can enable the positive electrode active material to have a low residual alkali content, the positive electrode plate to have a low electrode plate resistance, and the battery to have excellent Coulombic efficiency and cycling performance.

In any embodiment, the median particle size Dᵥ50 of the positive electrode active material is 1.0 µm≤Dᵥ50≤10 µm, and optionally 1.5 µm to 5.0 µm.

By controlling the particle size of the positive electrode active material within an appropriate range, the physical gelling in a subsequent slurry caused by a too small particle size can be avoided or reduced, to reduce the difficulty of coating. The influence on the dynamic performance of the positive electrode active material during the charging and discharging process due to the reduced compaction density caused by a too large particle size can also be avoided or reduced, so that both the processability and the dynamic performance are desirable. By further controlling the median particle size Dᵥ50 of the positive electrode active material within 1.5 µm to 5.0 µm, the Coulombic efficiency and cycling performance of the battery can be further improved.

In any embodiment, based on the total weight of the positive electrode active material, the content of residual alkali NaHCO₃ in the positive electrode active material is 0.05% to 2.5% and optionally 0.05% to 0.5%.

With the positive electrode active material having a suitable content of residual alkali NaHCO₃, the production cost of the production process can be controlled, and the chemical gelling in a subsequent slurry caused by a too high residual alkali content can be avoided or reduced, to reduce the difficulty of coating. The production cost, processability, and performance of the positive electrode active material are all desirable, which is beneficial to reducing the electrode plate resistance of the positive electrode plate, whereby the battery has excellent electrical performance and application prospect. By further controlling the content of residual alkali NaHCO₃ in the positive electrode active material within 0.05% to 0.5%, the electrode plate resistance of the positive electrode plate is further reduced and the Coulombic efficiency and cycling performance of the battery are improved.

A second aspect of this application provides a method for preparing a positive electrode active material, which includes the following steps:
dissolving raw materials including a sodium source, an R source, a phosphorus source, and a carbon source in deionized water and mixing uniformly to obtain a mixed slurry, where optionally, the raw materials further include an M source; and
drying and then calcining the mixed slurry to prepare the positive electrode active material, where the positive electrode active material is a polyanionic compound/carbon composite, and the positive electrode active material has the following general formula:

   Na₄₋ₓR_{3-y}M_{z}(PO₄)₂P₂O₇/C
where R includes at least one of Mg, Al, Sc, Ti, V, Cr, Mn, Fe, Co, Ni, Cu, Zn, Zr, Nb, Mo, Sn, Hf, Ta, W, and Pb, M includes at least one of Mg, Al, Sc, Ti, V, Cr, Mn, Fe, Co, Ni, Cu, Zn, Zr, Nb, Mo, Sn, Hf, Ta, Si, W, and Pb, 0≤x≤0.5, 0≤y≤0.5, 0≤z<x+y, and x and y are not both 0.

The preparation method of the positive electrode active material is simple and the manufacturing cost is low. Since the prepared positive electrode active material has a Na vacancy or an R metal vacancy, where R includes at least one of Mg, Al, Sc, Ti, V, Cr, Mn, Fe, Co, Ni, Cu, Zn, Zr, Nb, Mo, Sn, Hf, Ta, W, and Pb, the content of residual alkali in the positive electrode active material and the electrode plate resistance of the positive electrode plate are reduced, and the Coulombic efficiency and cycling efficiency of the battery are improved.

In any embodiment, 0<y-z≤0.3.

The positive electrode active material provides an R metal vacancy, where R includes at least one of Mg, Al, Sc, Ti, V, Cr, Mn, Fe, Co, Ni, Cu, Zn, Zr, Nb, Mo, Sn, Hf, Ta, W, and Pb. For one thing, the R metal vacancy distorts chemical bonds between other elements in the positive electrode active material, to widen the diffusion channel of Na ions, improve the transport speed of Na ions during charging and discharging, and improve the electrical conductivity of the positive electrode active material, thereby improving the Coulombic efficiency and cycling performance of the battery. For another, the R metal vacancy can also change the electron cloud distribution in elements such as P and O, thereby improving the conductivity of the positive electrode active material and improving the cycling performance and Coulombic efficiency of the battery.

In any embodiment, the drying and then calcining the mixed slurry include the following steps:
drying the mixed slurry to obtain a precursor powder; and
calcining the precursor powder at a calcination temperature of 400°C to 650°C for a calcination time of 5 h to 15 h to prepare the positive electrode active material.

By controlling the calcination temperature and calcination time within an appropriate range, the positive electrode active material has a Na vacancy or an R metal vacancy, which is conducive to reducing the content of residual alkali in the positive electrode active material and the electrode plate resistance of the positive electrode plate, and improving the Coulombic efficiency and cycling efficiency of the battery.

In any embodiment, the calcination temperature is 500°C to 600°C.

By controlling the calcination temperature within 500°C to 600°C, the content of residual alkali in the positive electrode active material and the electrode plate resistance of the positive electrode plate are further reduced.

In any embodiment, the calcination time is 8 h to 13 h.

By controlling the calcination time within 8 h to 13 h, the content of residual alkali in the positive electrode active material and the electrode plate resistance of the positive electrode plate are reduced.

In any embodiment, the R source includes one or more of a magnesium source, an aluminum source, a scandium source, a titanium source, a vanadium source, a chromium source, a manganese source, an iron source, a cobalt source, a nickel source, a copper source, a zinc source, a zirconium source, a niobium source, a molybdenum source, a tin source, a hafnium source, a tantalum source, a tungsten source, and a lead source.

In any embodiment, the M source includes one or more of a magnesium source, an aluminum source, a scandium source, a titanium source, a vanadium source, a chromium source, a manganese source, an iron source, a cobalt source, a nickel source, a copper source, a zinc source, a zirconium source, a niobium source, a molybdenum source, a tin source, a hafnium source, a tantalum source, a silicon source, a tungsten source, and a lead source.

In any embodiment, the iron source includes one or more of ferrous oxalate, ferric nitrate, ferrous sulfate, ferrous chloride, ferric oxalate, ferric acetate, ferric oxide, ferrous oxide, and metallic iron.

A third aspect of this application provides a positive electrode plate, which includes a positive electrode film layer. The positive electrode film layer includes a binder, at least one of a one-dimensional conductive material and a zero-dimensional conductive material, and the positive electrode active material according to the first aspect or a positive electrode active material prepared by using the preparation method according to the second aspect.

In any embodiment, based on the total weight of the positive electrode film layer, the content in percentage by weight of the binder is 1.5% to 3%, and optionally 2.0% to 2.5%.

The content in percentage by weight of the binder is controlled within an appropriate range to provide sufficient bonding force without causing the resistance of the electrode plate to be too large, which is beneficial to improving the Coulombic efficiency and cycling performance of the battery. By further controlling the content in percentage by weight of the binder within the range of 2.0% to 2.5%, the electrode plate resistance of the positive electrode plate is reduced.

In any embodiment, the one-dimensional conductive material includes one or more of a single-walled carbon nanotube and a multi-walled carbon nanotube; and/or
based on the total weight of the positive electrode film layer, the content in percentage by weight of the one-dimensional conductive material is 0.2% to 1% and optionally 0.5% to 0.9%.

By controlling the content in percentage by weight of the one-dimensional conductive material within an appropriate range, the Coulombic efficiency and cycling performance of the battery can be improved. By further controlling the content in percentage by weight of the one-dimensional conductive material within the range of 0.5% to 0.9%, the cycling performance of the battery can be further improved.

In any embodiment, the zero-dimensional conductive material includes one or more of Super P, Ketjen black, and acetylene black, and/or
based on the total weight of the positive electrode film layer, the content in percentage by weight of the zero-dimensional conductive material is 1% to 3% and optionally 2% to 2.8%.

By controlling the content in percentage by weight of the zero-dimensional conductive material within an appropriate range, the Coulombic efficiency and cycling performance of the battery can be improved. By further controlling the content in percentage by weight of the zero-dimensional conductive material within the range of 2% to 2.8%, the cycling performance of the battery can be further improved.

A fourth aspect of this application provides a secondary battery, which includes the positive electrode plate according to the third aspect.

In any embodiment, the secondary battery is a negative electrode sodium-free secondary battery.

In any embodiment, the secondary battery further includes a negative electrode plate. The negative electrode plate includes a negative electrode current collector and a base coating layer disposed on at least one surface of the negative electrode current collector. The base coating layer includes one or more of carbon nanotubes, graphite, graphene, silver/carbon composite nanoparticles, and tin/carbon composite nanoparticles.

The base coating layer not only has excellent electrical conductivity, but also facilitates the uniform deposition of metal ions on the surface of the current collector, improving the Coulombic efficiency and cycling performance of the battery.

In any embodiment, the areal density of the base coating layer is 5 g/m² to 50 g/m².

A base coating layer having an areal density of 5 g/m² to 50 g/m² facilitates the uniform distribution of nucleation sites, promotes the uniform deposition of the metal, and does not affect the electron transport behavior.

In any embodiment, the thickness of the base coating layer is 2 µm to 100 µm.

By controlling the thickness of the base coating layer within the range of 2 µm to 100 µm, enough nucleation sites can be provided, to facilitate the uniform deposition of metal ions and suppress the growth of dendrites.

A fifth aspect of this application provides a power consuming apparatus, which includes the secondary battery according to the fourth aspect of this application.

### BRIEF DESCRIPTION OF THE DRAWINGS

FIG. 1 shows a schematic view of a secondary battery cell according to an embodiment of this application;
FIG. 2 shows an exploded view of the secondary battery cell according to an embodiment of this application as shown in FIG. 1;
FIG. 3 shows a schematic view of a battery module according to an embodiment of this application;
FIG. 4 shows a schematic view of a battery pack according to an embodiment of this application;
FIG. 5 shows an exploded view of the battery pack according to an embodiment of this application as shown in FIG. 4; and
FIG. 6 shows a schematic view of a power consuming apparatus powered by a secondary battery according to an embodiment of this application.

Description of reference signs:
1. battery pack; 2. upper box; 3. lower box; 4. battery module; 5. secondary battery cell; 51. housing; 52. electrode assembly; 53 cover plate.

### DETAILED DESCRIPTION

Hereinafter, embodiments that specifically disclose a positive electrode active material and a preparation method therefor, a positive electrode plate, a secondary battery, and a power consuming apparatus of this application will be described in detail with reference to the drawings as appropriate. However, there are cases where unnecessary detailed descriptions are omitted. For example, there are cases where detailed descriptions of well-known items and repeated descriptions of actually identical structures are omitted, to avoid unnecessary redundancy in the following descriptions and to facilitate the understanding by those skilled in the art. In addition, the drawings and subsequent descriptions are provided for those skilled in the art to fully understand this application, and are not intended to limit the subject matter recited in the claims.

The "ranges" disclosed in this application are defined in the form of lower and upper limits, with a given range being defined by the selection of a lower limit and an upper limit defining the boundaries of the particular range. A range defined in this manner may be inclusive or exclusive of the end values, and may be arbitrarily combined, that is, any lower limit may be combined with any upper limit to form a range. For example, if ranges of 60 to 120 and 80 to 110 are listed for a particular parameter, it is to be understood that ranges of 60 to 110 and 80 to 120 are also expected. Additionally, if the minimum range values 1 and 2 and the maximum range values 3, 4 and 5 are listed, the following ranges are all contemplated: 1 to 3, 1 to 4, 1 to 5, 2 to 3, 2 to 4 and 2 to 5. In this application, unless stated otherwise, the numerical range "a to b" represents an abbreviated representation of any combination of real numbers between a to b, where both a and b are real numbers. For example, the numerical range "0 to 5" means that all real numbers between 0 and 5 are listed herein, and "0 to 5" is merely an abbreviated representation of the combination of these numbers. In addition, when a parameter is expressed as an integer ≥ 2, it is equivalent to disclosing that the parameter is, for example, an integer of 2, 3, 4, 5, 6, 7, 8, 9, 10, 11, and 12, etc.

Unless otherwise specified, all the embodiments and optional embodiments of this application can be combined with each other to form new technical solutions.

Unless otherwise specified, all technical features and optional technical features of this application can be combined with each other to form new technical solutions.

Unless otherwise specified, all the steps in this application can be performed in the order described or in a random order, and preferably in the order described. For example, the method includes steps (a) and (b), meaning that the method may include steps (a) and (b) performed sequentially, or may include steps (b) and (a) performed sequentially. For example, the reference to the method may further include step (c), meaning that step (c) may be added to the method in any order. For example, the method may include steps (a), (b) and (c), include steps (a), (c) and (b), or steps (c), (a) and (b), and the like.

Unless otherwise specifically stated, "comprising" and "including" mentioned in this application indicate open inclusion or closed inclusion. For example, the "including" and "comprising" may indicate that it is possible to include or comprise other components not listed, and it is also possible to include or comprise the listed components exclusively.

Unless otherwise specified, the term "or" is inclusive in this application. For example, the phrase "A or B" means "A, B, or both A and B". More specifically, the condition "A or B" is satisfied by any one of the following conditions: A is true (or present) and B is false (or absent); A is false (or absent) and B is true (or present); or both A and B are true (or present).

Generally, during the production process of the positive electrode material for sodium batteries, due to the preparation process, the ratio of raw materials, and the like, impurity sodium tends to remain in the positive electrode material. Sodium is also easy to be removed from the bulk phase of the positive electrode material, resulting in the potential production of residual alkali such as sodium carbonate, sodium hydroxide, and sodium bicarbonate in the positive electrode material. This causes the expansion and poor thermal stability of the positive electrode material, which not only lead to the problems such as low electronic conductivity, low discharging capacity, and poor cycling performance of the battery, but also affect the safety of the battery. Therefore, there is a need to develop a positive electrode material with a low content of residual alkali and excellent electrical performances, to satisfy the requirements for use in the new generation of electrochemical systems.

### [Positive electrode active material]

Based on this, this application provides a positive electrode active material. The positive electrode active material is a polyanionic compound/carbon composite, and the positive electrode active material has the following general formula:

Na₄₋ₓR_{3-y}M_{z}(PO₄)₂P₂O₇/C

where R includes at least one of Mg, Al, Sc, Ti, V, Cr, Mn, Fe, Co, Ni, Cu, Zn, Zr, Nb, Mo, Sn, Hf, Ta, W, and Pb, M includes at least one of Mg, Al, Sc, Ti, V, Cr, Mn, Fe, Co, Ni, Cu, Zn, Zr, Nb, Mo, Sn, Hf, Ta, Si, W, and Pb, 0≤x≤0.5, 0≤y≤0.5, 0≤z<x+y, and x and y are not both 0.

In some embodiments, x is optionally 0.001, 0.1, 0.15, 0.2, 0.25, 0.3, 0.35, 0.4, 0.45, 0.5, or a value in a range formed by any two of the above points, and y is optionally 0.001, 0.1, 0.15, 0.2, 0.25, 0.3, 0.35, 0.4, 0.45, 0.5, or a value in a range formed by any two of the above points.

In some embodiments, R includes Fe, and M includes Mn. In some embodiments, R includes Al, and M includes Mn. In some embodiments, R includes V, and M includes Ni. In some embodiments, R includes Fe, and M includes Mn, Co, and Ni. In some embodiments, R includes Mn, and M includes Si.

The positive electrode active material can provide a Na vacancy or an R metal vacancy, where R includes at least one of Mg, Al, Sc, Ti, V, Cr, Mn, Fe, Co, Ni, Cu, Zn, Zr, Nb, Mo, Sn, Hf, Ta, W, and Pb. For one thing, the existence of the Na vacancy or R metal vacancy changes the chemical bond distortion between other elements in the positive electrode active material, widens the diffusion channel of Na ions, effectively promotes the migration of Na ions, inhibits or reduces the formation of residual alkali in the positive electrode active material, and reduces the electrode plate resistance of the positive electrode plate. For another, the optimized Na ion diffusion channel can also improve the electrical conductivity of the positive electrode active material. In addition, doping with a metal including at least one of Mg, Al, Sc, Ti, V, Cr, Mn, Fe, Co, Ni, Cu, Zn, Zr, Nb, Mo, Sn, Hf, Ta, Si, W, and Pb can affect the structural change of the positive electrode active material, expand the interplanar gap, accelerate the migration of Na ions, and further improve the Coulombic efficiency and cycling performance of the battery and improve the performance of the battery.

In some embodiments, 0≤x≤0.5, and optionally 0.01≤x≤ 0.2.

In some embodiments, x is optionally 0.001, 0.1, 0.15, 0.2, 0.25, 0.3, 0.35, 0.4, 0.45, 0.5, or a value in a range formed by any two of the above points.

In some embodiments, 0≤x≤0.5, 0≤y≤0.5, and 0≤z<x+y.

In some embodiments, 0<x≤0.3, 0≤y≤0.5, and 0≤z<x+y.

In some embodiments, 0.01≤x≤0.2, 0≤y≤0.3, and 0≤z<x+y.

In some embodiments, 0.01≤x≤0.2, 0≤y≤0.5, and 0≤z<x+y.

In some embodiments, 0.2≤x≤0.5, 0.2≤y≤0.5, and 0≤z<x+y.

The Na vacancy provided in the positive electrode active material can effectively promote the migration of Na ions and inhibit or reduce the formation of residual alkali in the positive electrode active material. For one thing, the existence of Na vacancy can improve the valence state of other metals in the positive electrode active material, enhance the oxidation resistance of the positive electrode active material, inhibit or reduce the reaction between the positive electrode active material and water, reduce the content of residual alkali in the positive electrode active material, and reduce the electrode plate resistance of the positive electrode plate. For another, the optimized Na ion migration path can improve the dynamic performance of the positive electrode active material, improve the Coulombic efficiency and cycling performance of the battery, and improve the electrical performance of the battery. By further controlling 0.01≤x≤0.2, the content of residual alkali in the positive electrode active material and the electrode plate resistance of the positive electrode plate are further reduced.

In some embodiments, 0<y-z≤0.3.

In some embodiments, y is optionally 0, 0.1, 0.15, 0.2, 0.25, 0.3, 0.35, 0.4, 0.45, 0.3, or a value in a range formed by any two of the above points; and z is optionally 0, 0.02, 0.05, 0.07, 0.1, 0.12, 0.15, 0.17, 0.2, or a value in a range formed by any two of the above points, and z<y.

In some embodiments, 0≤x≤0.5, and 0<y-z≤0.3.

In some embodiments, 0≤x≤0.2, and 0<y-z≤0.3.

The positive electrode active material provides an R metal vacancy, where R includes at least one of Mg, Al, Sc, Ti, V, Cr, Mn, Fe, Co, Ni, Cu, Zn, Zr, Nb, Mo, Sn, Hf, Ta, W, and Pb. For one thing, the R metal vacancy distorts chemical bonds between other elements in the positive electrode active material, to widen the diffusion channel of Na ions, improve the transport speed of Na ions during charging and discharging, and improve the electrical conductivity of the positive electrode active material, thereby improving the Coulombic efficiency and cycling performance of the battery. For another, the R metal vacancy can also change the electron cloud distribution in elements such as P and O, thereby improving the conductivity of the positive electrode active material and improving the cycling performance and Coulombic efficiency of the battery.

In some embodiments, 0<x≤0.5 and 0<z≤y≤0.5.

In some embodiments, x is optionally 0.001, 0.1, 0.15, 0.2, 0.25, 0.3, 0.35, 0.4, 0.45, 0.5, or a value in a range formed by any two of the above points; y is optionally 0, 0.1, 0.15, 0.2, 0.25, 0.3, 0.35, 0.4, 0.45, 0.5, or a value in a range formed by any two of the above points; and z is optionally 0, 0.1, 0.15, 0.2, 0.25, 0.3, 0.35, 0.4, 0.45, 0.5, or a value in a range formed by any two of the above points, and z<y.

In some embodiments, 0≤x≤0.5, 0<z, and z=y.

In some embodiments, 0<x≤0.5 and 0<z<y.

On the basis of the positive electrode active material providing a Na vacancy, the positive electrode active material is further doped with at least one of Mg, Al, Sc, Ti, V, Cr, Mn, Fe, Co, Ni, Cu, Zn, Zr, Nb, Mo, Sn, Hf, Ta, Si, W, and Pb. The doping metal occupies an R metal vacancy, which can affect the structural change of the positive electrode active material, expand the interplanar gap, accelerate the migration of Na ions, and further improve the electrical conductivity of the positive electrode active material, thereby improving the cycling performance and Coulombic efficiency of the battery.

In some embodiments, R includes one or more of Fe, Co, Ni, and Mn; M includes one or more of Mg, Al, Sc, Ti, V, Cr, Mn, Si, and Co.

In some embodiments, R includes Fe, and M includes Mn. In some embodiments, R includes Fe, and M includes Ni. In some embodiments, R includes Fe, and M includes Mn and Ni. In some embodiments, R includes V, and M includes Si. In some embodiments, R includes Mn, and M includes Si.

All of the above-mentioned metal materials can enable the positive electrode active material to have a low residual alkali content, the positive electrode plate to have a low electrode plate resistance, and the battery to have excellent Coulombic efficiency and cycling performance.

In some embodiments, the median particle size Dᵥ50 of the positive electrode active material is 1.0 µm≤Dᵥ50≤10 µm, and optionally 1.5 µm to 5.0 µm.

In some embodiments, the median particle size Dᵥ50 of the positive electrode active material is optionally 1.0 µm, 1.5 µm, 2.0 µm, 2.5 µm, 3.0 µm, 3.5 µm, 4.0 µm, 4.5 µm, 5.0 µm, 5.5 µm, 6.0 µm, 6.5 µm, 7.0 µm, 7.5 µm, 8.0 µm, 8.5 µm, 9.0 µm, 9.5 µm, 10 µm, or a value in a range formed by any two of the above points.

The median particle size Dᵥ50 of the positive electrode active material can be tested by any means known in the art. For example, according to GB/T 19077-2016 Particle size analysis-laser diffraction method, 0.1 g to 0.13 g of a positive electrode active material sample to be tested was weighed into a 50 mL beaker, 5 g of absolute ethanol was added, and then a stirring rod of about 2.5 mm was added and sealing was performed by using a plastic wrap. The sample was sonicated for 5 min, transferred to a magnetic stirrer, and stirred at 500 rpm for 20 min or more. 2 samples were tested for each batch of product. The Mastersizer 2000E laser particle size analyzer from Malvern Instruments Inc. was used for the test.

By controlling the particle size of the positive electrode active material within an appropriate range, the physical gelling in a subsequent slurry caused by a too small particle size can be avoided or reduced, to reduce the difficulty of coating. The influence on the dynamic performance of the positive electrode active material during the charging and discharging process due to the reduced compaction density caused by a too large particle size can also be avoided or reduced, so that both the processability and the dynamic performance are desirable. By further controlling the median particle size Dᵥ50 of the positive electrode active material within 1.5 µm to 5.0 µm, the Coulombic efficiency and cycling performance of the battery can be further improved.

In some embodiments, based on the total weight of the positive electrode active material, the content of residual alkali NaHCO₃ in the positive electrode active material is 0.05% to 2.5% and optionally 0.05% to 0.5%.

In some embodiments, based on the total weight of the positive electrode active material, the content of residual alkali NaHCO₃ in the positive electrode active material is optionally 0.05%, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, or a value in a range formed by any two of the above points.

The content of residual alkali NaHCO₃ in the positive electrode active material can be tested by any means known in the art. For example, acid-base titration is used to test the content of residual alkali. Sodium bicarbonate and sodium ions in the positive electrode material are titrated with a hydrochloric acid standard solution, where a pH electrode is used as an indicator electrode, and the endpoint is determined by a sudden jump in potential change. The titration volume of the standard solution for titration is determined according to the endpoint of the titration. The content in percentage by weight obtained by the calculated weight of NaHCO₃ dividing the weight of the positive electrode active material is used as the content of residual alkali NaHCO₃ in the positive electrode active material.

In some embodiments, the residual alkali in the positive electrode active material further includes NaOH, Na₂CO₃ and other alkaline substances. The change trend of the content of other alkaline substances is the same as that of the content of the residual alkali NaHCO₃. That is, the content of residual alkali NaHCO₃ in the positive electrode active material can be used to characterize the content of the alkaline substances contained therein. Therefore, the content of residual alkali NaHCO₃ can be used to characterize the ability of the positive electrode active material to produce residual alkali.

With the positive electrode active material having a suitable content of residual alkali NaHCO₃, the production cost of the production process can be controlled, and the chemical gelling in a subsequent slurry caused by a too high residual alkali content can be avoided or reduced, to reduce the difficulty of coating. The production cost, processability, and performance of the positive electrode active material are all desirable, which is beneficial to reducing the electrode plate resistance of the positive electrode plate, whereby the battery has excellent electrical performance and application prospect. By further controlling the content of residual alkali NaHCO₃ in the positive electrode active material within 0.05% to 0.5%, the electrode plate resistance of the positive electrode plate is further reduced and the Coulombic efficiency and cycling performance of the battery are improved.

This application further provides a method for preparing a positive electrode active material, which includes the following steps:
dissolving raw materials including a sodium source, an R source, a phosphorus source, and a carbon source in deionized water and mixing uniformly to obtain a mixed slurry, where optionally, the raw materials further include an M source; and
drying and then calcining the mixed slurry to prepare the positive electrode active material, where the positive electrode active material is a polyanionic compound/carbon composite, and the positive electrode active material has the following general formula:

   Na₄₋ₓR_{3-y}M_{z}(PO₄)₂P₂O₇/C
where R includes at least one of Mg, Al, Sc, Ti, V, Cr, Mn, Fe, Co, Ni, Cu, Zn, Zr, Nb, Mo, Sn, Hf, Ta, W, and Pb, M includes at least one of Mg, Al, Sc, Ti, V, Cr, Mn, Fe, Co, Ni, Cu, Zn, Zr, Nb, Mo, Sn, Hf, Ta, Si, W, and Pb, 0≤x≤0.5, 0≤y≤0.5, 0≤z<x+y, and x and y are not both 0.

In some embodiments, x is optionally 0.001, 0.1, 0.15, 0.2, 0.25, 0.3, 0.35, 0.4, 0.45, 0.5, or a value in a range formed by any two of the above points, and y is optionally 0.001, 0.1, 0.15, 0.2, 0.25, 0.3, 0.35, 0.4, 0.45, 0.5, or a value in a range formed by any two of the above points.

The preparation method of the positive electrode active material is simple and the manufacturing cost is low. Since the prepared positive electrode active material has a Na vacancy or an R metal vacancy, where R includes at least one of Mg, Al, Sc, Ti, V, Cr, Mn, Fe, Co, Ni, Cu, Zn, Zr, Nb, Mo, Sn, Hf, Ta, W, and Pb, the content of residual alkali in the positive electrode active material and the electrode plate resistance of the positive electrode plate are reduced, and the Coulombic efficiency and cycling efficiency of the battery are improved.

In some embodiments, 0<y-z≤0.3.

In some embodiments, y is optionally 0, 0.1, 0.15, 0.2, 0.25, 0.3, 0.35, 0.4, 0.45, 0.3, or a value in a range formed by any two of the above points; and z is optionally 0, 0.02, 0.05, 0.07, 0.1, 0.12, 0.15, 0.17, 0.2, or a value in a range formed by any two of the above points, and z<y.

The positive electrode active material provides an R metal vacancy, where R includes at least one of Mg, Al, Sc, Ti, V, Cr, Mn, Fe, Co, Ni, Cu, Zn, Zr, Nb, Mo, Sn, Hf, Ta, W, and Pb. For one thing, the R metal vacancy distorts chemical bonds between other elements in the positive electrode active material, to widen the diffusion channel of Na ions, improve the transport speed of Na ions during charging and discharging, and improve the electrical conductivity of the positive electrode active material, thereby improving the Coulombic efficiency and cycling performance of the battery. For another, the R metal vacancy can also change the electron cloud distribution in elements such as P and O, thereby improving the conductivity of the positive electrode active material and improving the cycling performance and Coulombic efficiency of the battery.

In some embodiments, the drying and then calcining the mixed slurry includes the following steps:
drying the mixed slurry to obtain a precursor powder.

The precursor powder is calcinated at a calcination temperature of 400°C to 650°C for a calcination time of 5 h to 15 h to prepare the positive electrode active material.

In some embodiments, the calcination temperature is optionally 400°C, 420°C, 450°C, 480°C, 500°C, 530°C, 550°C, 570°C, 600°C, 650°C, or a value in a range formed by any two of the above points.

In some embodiments, the calcination time is optionally 5 h, 6 h, 7 h, 8 h, 9 h, 10 h, 11 h, 12 h, 13 h, 14 h, 15 h, or a value in a range formed by any two of the above points.

By controlling the calcination temperature and calcination time within an appropriate range, the positive electrode active material has a Na vacancy or an R metal vacancy, which is conducive to reducing the content of residual alkali in the positive electrode active material and the electrode plate resistance of the positive electrode plate, and improving the Coulombic efficiency and cycling efficiency of the battery.

In some embodiments, the calcination temperature is 500°C to 600°C.

In some embodiments, the calcination temperature is optionally 500°C, 510°C, 520°C, 530°C, 540°C, 550°C, 560°C, 570°C, 580°C, 590°C, 600°C, or a value in a range formed by any two of the above points.

By controlling the calcination temperature within 500°C to 600°C, the content of residual alkali in the positive electrode active material and the electrode plate resistance of the positive electrode plate are further reduced.

In some embodiments, the calcination time is 8 h to 13 h.

In some embodiments, the calcination time is optionally 8 h, 9 h, 9.5 h, 10 h, 10.5 h, 11 h, 12 h, 12.5 h, 13 h, or a value in a range formed by any two of the above points.

By controlling the calcination time within 8 h to 13 h, the content of residual alkali in the positive electrode active material and the electrode plate resistance of the positive electrode plate are reduced.

In some embodiments, the R source includes one or more of a magnesium source, an aluminum source, a scandium source, a titanium source, a vanadium source, a chromium source, a manganese source, an iron source, a cobalt source, a nickel source, a copper source, a zinc source, a zirconium source, a niobium source, a molybdenum source, a tin source, a hafnium source, a tantalum source, a tungsten source, and a lead source.

In some embodiments, the M source includes one or more of a magnesium source, an aluminum source, a scandium source, a titanium source, a vanadium source, a chromium source, a manganese source, an iron source, a cobalt source, a nickel source, a copper source, a zinc source, a zirconium source, a niobium source, a molybdenum source, a tin source, a hafnium source, a tantalum source, a silicon source, a tungsten source, and a lead source.

In some embodiments, the iron source includes one or more of ferrous oxalate, ferric nitrate, ferrous sulfate, ferrous chloride, ferric oxalate, ferric acetate, ferric oxide, ferrous oxide, and metallic iron.

### [Positive electrode plate]

This application further provides a positive electrode plate, which includes a positive electrode film layer. The positive electrode film layer includes a binder, at least one of a one-dimensional conductive material and a zero-dimensional conductive material, and a positive electrode active material according to some embodiments or a positive electrode active material prepared by the preparation method according to some embodiments.

In some embodiments, the positive electrode film layer includes a one-dimensional conductive material. In some embodiments, the positive electrode film layer includes a zero-dimensional conductive material.

In some embodiments, the positive electrode film layer includes both a one-dimensional conductive material and a zero-dimensional conductive material. The addition of two forms of conductive materials is conducive to further increasing the electrical conductivity of the positive electrode plate.

In some embodiments, based on the total weight of the positive electrode film layer, a content in percentage by weight of the binder is 1.5% to 3%, and optionally 2.0% to 2.5%.

In some embodiments, based on the total weight of the positive electrode film layer, the content in percentage by weight of the binder is optionally 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3%, or a value in a range formed by any two of the above points.

The content in percentage by weight of the binder is controlled within an appropriate range to provide sufficient bonding force, without causing the resistance of the electrode plate to be too large, which is beneficial to improving the Coulombic efficiency and cycling performance of the battery. By further controlling the content in percentage by weight of the binder within the range of 2.0% to 2.5%, the electrode plate resistance of the positive electrode plate is reduced.

In some embodiments, the one-dimensional conductive material includes one or more of a single-walled carbon nanotube and a multi-walled carbon nanotube.

In some embodiments, the one-dimensional conductive material includes one or more of a single-wall carbon nanotube and a multi-wall carbon nanotube. Based on the total weight of the positive electrode film layer, the content in percentage by weight of the one-dimensional conductive material is 0.2% to 1%, and optionally 0.5% to 0.9%.

In some embodiments, the one-dimensional conductive material includes a single-walled carbon nanotube. In some embodiments, the one-dimensional conductive material includes a multi-wall carbon nanotube. In some embodiments, the one-dimensional conductive material includes a single-wall carbon nanotube and a multi-wall carbon nanotube.

In some embodiments, based on the total weight of the positive electrode film layer, the content in percentage by weight of the one-dimensional conductive material is optionally 0.2%, 0.3%, 0.4%, 0.5%, 0.6%, 0.7%, 0.8%, 0.9%, 1%, or a value in a range formed by any two of the above points.

By controlling the content in percentage by weight of the one-dimensional conductive material within an appropriate range, the Coulombic efficiency and cycling performance of the battery can be improved. By further controlling the content in percentage by weight of the one-dimensional conductive material within the range of 0.5% to 0.9%, the cycling performance of the battery can be further improved.

In some embodiments, the zero-dimensional conductive material includes one or more of Super P, Ketjen black, and acetylene black.

In some embodiments, the zero-dimensional conductive material includes one or more of Super P, Ketjen black, and acetylene black. Based on the total weight of the positive electrode film layer, the content in percentage by weight of the zero-dimensional conductive material is 1% to 3%, and optionally 2% to 2.8%.

In some embodiments, the zero-dimensional conductive material includes Super P. In some embodiments, the zero-dimensional conductive material includes Ketjen black. In some embodiments, the zero-dimensional conductive material includes Super P and Ketjen black.

In some embodiments, based on the total weight of the positive electrode film layer, the content in percentage by weight of the zero-dimensional conductive material is optionally 1%, 1.2%, 1.5%, 1.7%, 2%, 2.2%, 2.5%, 2.7%, 3%, or a value in a range formed by any two of the above points.

By controlling the content in percentage by weight of the zero-dimensional conductive material within an appropriate range, the Coulombic efficiency and cycling performance of the battery can be improved. By further controlling the content in percentage by weight of the zero-dimensional conductive material within the range of 2% to 2.8%, the cycling performance of the battery can be further improved.

The positive electrode plate further includes a positive electrode current collector.

The positive electrode current collector may be a conductive carbon plate, a metal foil, a carbon-coated metal foil, a porous metal plate, or a composite current collector. The conductive carbon material of the conductive carbon plate is optionally one or more of Super P, carbon black, Ketjen black, carbon dots, carbon nanotubes, graphite, graphene, and carbon nanofibers. The metal material of the metal foil, the carbon-coated metal foil, and the porous metal plate are each independently selected at least one from copper, aluminum, nickel, and stainless steel. The composite current collector may be a composite current collector formed by complexing a metal foil with a polymer base film.

In some embodiments, the positive electrode plate can be prepared in the following manners: dispersing the components for preparing the positive electrode plate, for example, the positive electrode active material, the conductive material, the binder and any other components in a solvent (for example, N-methyl pyrrolidone) to form a positive electrode slurry; and applying the positive electrode slurry on a positive electrode current collector, followed by oven drying, cold pressing and other procedures, to obtain the positive electrode plate.

### [Negative-electrode plate]

The negative electrode plate may include only the negative electrode current collector and no negative electrode active material. The negative electrode plate may also have a metal phase pre-deposited on the negative electrode current collector.

In some embodiments, the negative electrode current collector may be a metal foil or a composite current collector. For example, an aluminum foil or copper foil can be used as the metal foil. The composite current collector may include a polymer material substrate and a metal layer formed on at least one surface of the polymer material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the negative electrode plate includes a negative electrode current collector and a base coating layer disposed on at least one surface of the negative electrode current collector. The base coating layer includes one or more of carbon nanotubes, graphite, graphene, silver/carbon composite nanoparticles, and tin/carbon composite nanoparticles.

The base coating layer not only has excellent electrical conductivity, but also facilitates the uniform deposition of metal ions on the surface of the current collector, improving the Coulombic efficiency and cycling performance of the battery.

In some embodiments, an areal density of the base coating layer is 5 g/m² to 50 g/m².

In some embodiments, the areal density of the base coating layer is optionally 5 g/m², 10 g/m², 15 g/m², 20 g/m², 25 g/m², 30 g/m², 35 g/m², 40 g/m², 45 g/m², 50 g/m² or a value in a range formed by any two of the above points.

A base coating layer having an areal density of 5 g/m² to 50 g/m² facilitates the uniform distribution of nucleation sites, promotes the uniform deposition of the metal, and does not affect the electron transport behavior.

In some embodiments, the thickness of the base coating layer is 2 µm to 100 µm.

In some embodiments, the thickness of the base coating layer is optionally 2 µm, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, or a value in a range formed by any two of the above points.

By controlling the thickness of the base coating layer within the range of 2 µm to 100 µm, enough nucleation sites can be provided, to facilitate the uniform deposition of metal ions and suppress the growth of dendrites.

### [Separator]

In some embodiments, the secondary battery further includes a separator. The type of the separator is not particularly limited in this application, and any well-known separator with a porous structure having good chemical stability and mechanical stability may be selected.

In some embodiments, the material of the separator may be selected from at least one of polyethylene, polypropylene, polyvinylidene fluoride, aramid fiber, polyethylene terephthalate, polytetrafluoroethylene, polyacrylonitrile, polyimide, polyamide, polyester, and natural fiber. The separator may be a single-layer film or a multi-layer composite film, which is not particularly limited. When the separator is a multi-layer composite film, the material of each layer may be the same or different, which is not particularly limited.

In some embodiments, the positive electrode plate, the negative electrode plate, and the separator can be made into an electrode assembly by a winding process or a lamination process.

In some embodiments, the secondary battery may include an outer package. The outer package can be used to encapsulate the above-mentioned electrode assembly and electrolyte.

In some embodiments, the outer package of the secondary battery may be a hard case, such as a hard plastic case, an aluminum case, a steel case, and the like. The outer package of the secondary battery can also be a soft pack, such as a bag-type soft pack. The material of the soft pack can be a plastic, and examples of the plastic include polypropylene, polybutylene terephthalate, and polybutylene succinate.

### [Secondary battery]

The secondary battery may include various forms, including, but not limited to, for example, a battery cell, a battery module, and a battery pack.

The battery cell includes a positive electrode plate provided in some embodiments. The positive electrode plate includes the positive electrode active material provided in some embodiments or a positive electrode active material prepared by the preparation method provided in some embodiments.

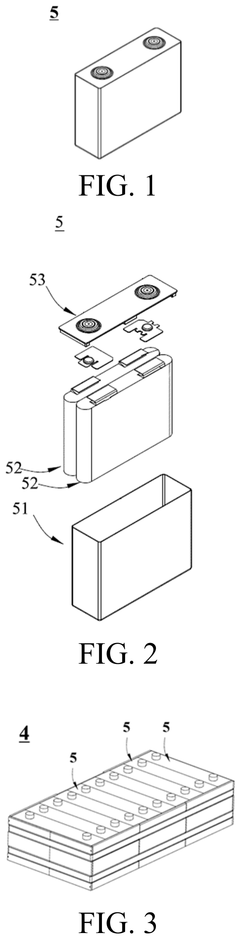

This application has no particular limitation on the shape of the battery cell, which can be cylindrical, square or any other shape. For example, FIG. 1 shows a battery cell 5 of a square structure as an example, and FIG. 2 is an exploded view of the battery cell 5.

In some embodiments, the secondary battery cell further includes a negative electrode plate, a separator, and an electrolyte solution.

In some embodiments, the secondary battery cell is a negative electrode sodium-free secondary battery.

A negative electrode sodium-free secondary battery has no pre-deposited negative electrode active material, and only includes a negative electrode current collector. During the first charging process, sodium ions get electrons at the cathode side to deposit metallic sodium on the surface of the current collector to form a sodium metal phase. During the discharging process, metallic sodium can be converted into sodium ions transported back to the positive electrode to achieve cyclic charging and discharging. Compared with other sodium secondary batteries, the negative electrode sodium-free secondary battery has no limitation from the negative electrode material, and can obtain a higher energy density. Moreover, while maintaining a high electrochemical performance of the battery, the production cycle of the battery can be shortened, the manufacturing cost of the battery can be reduced, and the production efficiency can be greatly improved.

In some embodiments, a CB value of the negative electrode sodium-free secondary battery is less than or equal to 0.1.

The CB value is obtained by dividing the capacity per unit area of the negative electrode plate in the secondary battery by the capacity per unit area of the positive electrode plate. Since no negative electrode active material is contained in the negative electrode sodium-free battery, the negative electrode plate has a small capacity per unit area, and the CB value of the secondary battery is less than or equal to 0.1.

In some embodiments, referring to FIG. 2, an outer package may include a housing 51 and a cover plate 53.

Here, the housing 51 can include a bottom plate and a side plate connected to the bottom plate, where the bottom plate and the side plate define an accommodating cavity. The housing 51 has an opening that communicates with the accommodating cavity, and the cover plate 53 can cover the opening to close the accommodating cavity. The positive electrode plate, the negative electrode plate, and the separator may be wound or stacked to form an electrode assembly 52. The electrode assembly 52 is enclosed in the accommodating cavity. The number of electrode assemblies 52 included in the secondary battery 5 may be one or more, which can be selected by those skilled in the art according to specific actual requirements.

### [Battery Module]

In some embodiments, the battery cell can be assembled into a battery module, the number of battery cells contained in the battery module can be one or more, and the specific number can be selected by those skilled in the art according to the application and capacity of the battery module.

FIG. 3 shows an example of a battery module 4. Referring to FIG. 3, in the battery module 4, multiple battery cells 5 may be sequentially arranged in the length direction of the battery module 4. Certainly, the multiple battery cells 5 can be arranged in any other way. The multiple battery cells 5 may further be fixed by fasteners.

Optionally, the battery module 4 may further include a shell having an accommodating space, in which the multiple battery cells 5 are accommodated.

### [Battery Pack]

In some embodiments, the battery module may further be assembled into a battery pack, the number of battery modules contained in the battery pack may be one or more, and the specific number can be selected by those skilled in the art according to the use and capacity of the battery pack.

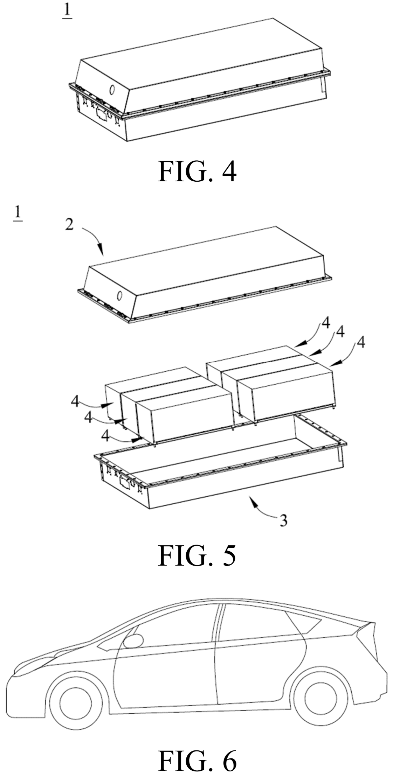

FIG. 4 and FIG. 5 show an example of a battery pack 1. Referring to FIG. 4 and FIG. 5, the battery pack 1 may include a battery box and multiple battery modules 4 provided in the battery box. The battery box includes an upper box 2 and a lower box 3, where the upper box 2 can cover the lower box 3, and defines an enclosed space for accommodating the battery module 4. The multiple battery modules 4 may be arranged in the battery box in any manner.

### [Power consuming apparatus]

In an embodiment of this application, a power consuming apparatus is provided, which includes a secondary battery according to any embodiment, a battery module according to any embodiment, or a battery pack according to any embodiment.

The power consuming apparatus includes at least one of the secondary battery, the battery module, or the battery pack provided in this application. The secondary battery, the battery module, or the battery pack can be used as a power source for the power consuming apparatus, and can also be used as an energy storage unit for the power consuming apparatus. The power consuming apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

For the power consuming apparatus, the secondary battery, the battery module, or the battery pack can be selected according to the requirements during use.

FIG. 6 shows an example of a power consuming apparatus. The power consuming apparatus is an all-electric vehicle, a hybrid electric vehicle, or a plug-in hybrid electric vehicle, etc. To meet the requirements of the power consuming apparatus for high power and high energy density of secondary batteries, a battery pack or a battery module may be used.

The apparatus used as another example may be, for example, a mobile phone, a tablet computer, and a laptop, etc. The apparatus is generally required to be light and thin, and can use a secondary battery as a power source.

### Examples

Examples of this application will be described hereinafter. The examples described below are exemplary and only used to explain this application, and should not be construed as a limitation on this application. Where specific techniques or conditions are not indicated in the examples, the techniques or conditions described in the literatures in the art or described in the product specifications are followed. The reagents or instruments for which no manufacturers are noted are all common products commercially available from the market.

### I. Preparation method

### Example 1

### 1) Preparation of a positive electrode active material

Sodium pyrophosphate, ferrous oxalate, and ammonium dihydrogen phosphate were dissolved in deionized water at a molar ratio of 1: 2.8: 2, and stirred continuously at room temperature for 30 min to obtain a mixed slurry. The mixed slurry was sanded to give an average particle size of 0.2 µm, and then an aqueous glucose solution was added, mixed and milled for 30 min to obtain a final slurry. The slurry was spray-dried, with an air intake temperature of 220°C and an air discharge temperature of 109°C, to obtain a powdery precursor. Finally, under an N₂ atmosphere, the temperature was raised to 320°C at a heating rate of 2°C and held for 4 h; and then further raised to 550°C at a heating rate of 2°C and held for 10 h. The sintered product was crushed and sieved to obtain a positive electrode active material Na₄Fe_{2.8}(PO₄)₂P₂O₇/C. Based on the total weight of the positive electrode active material, the carbon content was 2%, the median particle size Dᵥ50 of the positive electrode active material was 3.0 µm, and the content of residual alkali in the positive electrode active material was 0.52%.

### 2) Preparation of a positive electrode plate

2.5 wt% of a polyvinylidene fluoride binder was fully dissolved in N-methylpyrrolidone (NMP), and then 2.0 wt% of Super P, 1.0 wt% of carbon nanotubes, and 94.5 wt% of the positive electrode active material were added, stirred and mixed uniformly to obtain a positive electrode slurry. The slurry was uniformly coated on a surface of an aluminum foil that was a current collector, and then transferred to a vacuum drying oven and dried completely. The dried electrode plate was rolled and punched to obtain a positive electrode plate. The compaction density of the positive electrode film layer was 1.9 g/cm³. The resistance of the electrode plate was 0.6 Ω·cm.

### 3) Preparation of a negative electrode plate

Single-walled carbon nanotubes and carboxymethyl cellulose (CMC) were added to deionized water at a weight ratio of 1: 0.4 and stirred to form a uniform slurry. The slurry was coated on a surface of a copper foil that was a negative electrode current collector, and then transferred to a vacuum drying oven, and dried completely. The electrode plate was then punched to obtain a negative electrode plate without a negative electrode structure. The base coating layer had a thickness of 20 µm and an areal density of 25 g/m².

### 4) Electrolyte solution

In a glove box (H₂O < 0.1 ppm, and O₂< 0.1 ppm) under an argon atmosphere, the sodium salt sodium hexafluorophosphate NaPF₆ was dissolved in the organic solvent ethylene glycol dimethyl ether (DME), and stirred uniformly to obtain an electrolyte solution with a sodium salt concentration of 1.5 mol/L.

### 5) Separator

A polypropylene film was used as a separator.

### 6) Preparation of a battery

The positive electrode plate, the separator and the negative electrode plate were stacked sequentially, so that the separator was located between the positive electrode plate and the negative electrode plate for separation, and then a bare battery core was obtained by winding. The bare battery core was welded with tabs, filled into an aluminum package, and baked at 80°C to remove water. Then, the electrolyte solution was immediately injected, and the opening was sealed, to obtain an uncharged battery. The uncharged battery was then subjected to standing, hot and cold pressing, chemical formation, shaping, capacity test, and other procedures in sequence to obtain the negative electrode sodium-free secondary battery product of Example 1.

### Examples 2 to 6

The preparation method of the batteries of Examples 2 to 6 was similar to that of the battery of Example 1, except that the y value of Fe and x value of Na in the positive electrode active material were adjusted. Specific parameters were shown in Table 1.

### Example 7

### 1) Preparation of a positive electrode active material

Sodium pyrophosphate, ferrous oxalate, ammonium dihydrogen phosphate, and manganese oxide were dissolved in deionized water at a molar ratio of 0.98: 2.8: 2:0.1, and stirred continuously at room temperature for 30 min to obtain a mixed slurry. The mixed slurry was sanded to give an average particle size of 0.2 µm, and then an aqueous glucose solution was added, mixed and milled for 30 min to obtain a final slurry. The slurry was spray-dried, with an air intake temperature of 220°C and an air discharge temperature of 109°C, to obtain a powdery precursor. Finally, under an N₂ atmosphere, the temperature was raised to 320°C at a heating rate of 2°C and held for 4 h; and then further raised to 550°C at a heating rate of 2°C and held for 10 h. The sintered product was crushed and sieved to obtain a positive electrode active material Na_{3.95}Fe_{2.8}Mn_{0.1}(PO₄)₂P₂O₇/C. Based on the total weight of the positive electrode active material, the carbon content was 2%, the median particle size Dᵥ50 of the positive electrode active material was 3.0 µm, and the content of residual alkali in the positive electrode active material was 0.2%.

### 2) Preparation of a positive electrode plate

2.5 wt% of a polyvinylidene fluoride binder was fully dissolved in N-methylpyrrolidone (NMP), and then 2.0 wt% of Super P, 1.0 wt% of carbon nanotubes, and 94.5 wt% of the positive electrode active material were added, stirred and mixed uniformly to obtain a positive electrode slurry. The slurry was uniformly coated on a surface of an aluminum foil that was a current collector, and then transferred to a vacuum drying oven and dried completely. The dried electrode plate was rolled and punched to obtain a positive electrode plate. The compaction density of the positive electrode film layer was 1.9 g/cm³. The resistance of the electrode plate was 0.3 Ω cm.

### 3) Preparation of a negative electrode plate

Single-walled carbon nanotubes and carboxymethyl cellulose (CMC) were added to deionized water at a weight ratio of 1: 0.4 and stirred to form a uniform slurry. The slurry was coated on a surface of a copper foil that was a negative electrode current collector, and then transferred to a vacuum drying oven, and dried completely. The electrode plate was then punched to obtain a negative electrode plate without a negative electrode structure. The base coating layer had a thickness of 20 µm and an areal density of 25 g/m².

### 4) Electrolyte solution

In a glove box (H₂O<0.1 ppm, and O₂<0.1 ppm) under an argon atmosphere, the sodium salt sodium hexafluorophosphate NaPF₆ was dissolved in the organic solvent ethylene glycol dimethyl ether (DME), and stirred uniformly to obtain an electrolyte solution with a sodium salt concentration of 1.5 mol/L.

### 5) Separator

A polypropylene film was used as a separator.

### 6) Preparation of a battery

The positive electrode plate, the separator, and the negative electrode plate were stacked sequentially, so that the separator was located between the positive electrode plate and the negative electrode plate for separation, and then a bare battery core was obtained by winding. The bare battery core was welded with tabs, filled into an aluminum package, and baked at 80°C to remove water. Then, the electrolyte solution was immediately injected, and the opening was sealed, to obtain an uncharged battery. The uncharged battery was then subjected to standing, hot and cold pressing, chemical formation, shaping, capacity test, and other procedures in sequence to obtain the negative electrode sodium-free secondary battery product of Example 7.

### Examples 8 to 10

The preparation method of the batteries of Examples 8 to 10 was similar to that of the battery of Example 1, except that the x value of Na and y value of Fe and or z value of Mn in the positive electrode active material were adjusted. Specific parameters were shown in Table 1.

### Example 11

The preparation method of the battery of Example 11 was similar to that of the battery of Example 1, except that Fe in the positive electrode active material in Example 8 was adjusted to Mn. Specific parameters were shown in Table 1.

### Example 12

The preparation method of the battery of Example 12 was similar to that of the battery of Example 8, except that Fe in the positive electrode active material of Example 8 was adjusted to Mn, and Mn in the positive electrode active material of Example 8 was adjusted to Co. Specific parameters were shown in Table 1.

### Comparative Example 1

The preparation method of the battery of Comparative Example 1 was similar to that of the battery of Example 1, except that the preparation method of the positive electrode active material was adjusted. The preparation method was specifically as follows.

### 1) Preparation of a positive electrode active material

Sodium pyrophosphate, ferrous oxalate and ammonium dihydrogen phosphate were dissolved in deionized water at a molar ratio of 1: 3: 2, and stirred continuously at room temperature for 30 min to obtain a mixed slurry. The mixed slurry was sanded to give an average particle size of 0.2 µm, and then an aqueous glucose solution was added, mixed and milled for 10 min to obtain a final slurry. The slurry was spray-dried, with an air intake temperature of 220°C and an air discharge temperature of 109°C, to obtain a powdery precursor. Finally, under an N₂ atmosphere, the temperature was raised to 320°C at a heating rate of 2°C and held for 4 h; and then further raised to 550°C at a heating rate of 2°C and held for 10 h. The sintered product was crushed and sieved to obtain a positive electrode active material Na₄Fe₃(PO₄)₂P₂O₇/C. Based on the total weight of the positive electrode active material, the carbon content was 2%, the median particle size Dᵥ50 of the positive electrode active material was 3.0 µm, and the content of residual alkali in the positive electrode active material was 0.6%.

### 2) Preparation of a positive electrode plate

2.5 wt% of a polyvinylidene fluoride binder was fully dissolved in N-methylpyrrolidone (NMP), and then 2.0 wt% of Super P, 1.0 wt% of carbon nanotubes, and 94.5 wt% of the positive electrode active material were added, stirred and mixed uniformly to obtain a positive electrode slurry. The slurry was uniformly coated on a surface of an aluminum foil that was a current collector, and then transferred to a vacuum drying oven and dried completely. The dried electrode plate was rolled and punched to obtain a positive electrode plate. The compaction density of the positive electrode film layer was 1.9 g/cm³. The resistance of the electrode plate was 0.7 Ω cm.

### 3) Preparation of a negative electrode plate

Single-walled carbon nanotubes and carboxymethyl cellulose (CMC) were added to deionized water at a weight ratio of 1: 0.4 and stirred to form a uniform slurry. The slurry was coated on a surface of a copper foil that is a negative electrode current collector, and then transferred to a vacuum drying oven, and dried completely. The electrode plate was then punched to obtain a negative electrode plate without a negative electrode structure. The base coating layer had a thickness of 20 µm and an areal density of 25 g/m².

### 4) Electrolyte solution

In a glove box (H₂O<0.1 ppm, and O₂<0.1 ppm) under an argon atmosphere, the sodium salt sodium hexafluorophosphate NaPF₆ was dissolved in the organic solvent ethylene glycol dimethyl ether (DME), and stirred uniformly to obtain an electrolyte solution with a sodium salt concentration of 1.5 mol/L.

### 5) Separator

A polypropylene film was used as a separator.

### 6) Preparation of a battery

The positive electrode plate, the separator, and the negative electrode plate were stacked sequentially, so that the separator was located between the positive electrode plate and the negative electrode plate for separation, and then a bare battery core was obtained by winding. The bare battery core was welded with tabs, filled into an aluminum package, and baked at 80°C to remove water. Then, the electrolyte solution was immediately injected, and the opening was sealed, to obtain an uncharged battery. The uncharged battery was then subjected to standing, hot and cold pressing, chemical formation, shaping, capacity test, and other procedures in sequence to obtain the negative electrode sodium-free secondary battery product of Comparative Example 1.

### Comparative Example 2

The preparation method of the battery of Comparative Examples 2 was similar to that of the battery of Comparative Example 1, except that the contents of raw materials used during the preparation of the positive electrode active material were adjusted. Specific parameters were shown in Table 1.

### Comparative Examples 3 to 4

The preparation method of the battery of Comparative Examples 3 to 4 was similar to that of the battery of Comparative Example 1, except that different amounts of element Mn were introduced into the positive electrode active material and the amount of Fe element was adjusted. Specific parameters are shown in Table 1.

### Comparative Example 5

The preparation method of the battery of Comparative Example 5 was similar to that of the battery of Comparative Example 1, except that element Fe in the positive electrode active material was replaced by element Mn. Specific parameters were shown in Table 1.

### II. Performance test

### 1. Positive Electrode Active Material Test

### 1) Test of median particle size Dv50

According to GB/T 19077-2016 Particle size analysis-laser diffraction method, 0.1 g to 0.13 g of a positive electrode active material sample to be tested was weighed into a 50 mL beaker, 5 g of absolute ethanol was added, and then a stirring rod of about 2.5 mm was added and sealing was performed by using a plastic wrap. The sample was sonicated for 5 min, transferred to a magnetic stirrer, and stirred at 500 rpm for 20 min or more. 2 samples were tested for each batch of product. The Mastersizer 2000E laser particle size analyzer from Malvern Instruments Inc. was used for the test.

### 2) Residual alkali content test

### Test principle (acid-base titration method):

NaHCO₃ and Na⁺ in the positive electrode active material was titrated with a hydrochloric acid standard solution. A pH electrode was used as an indicator electrode, and the end point was determined by a sudden jump produced by the potential change. Reference may be made to the standard GB/T 9725-2007. Specifically, for example, NaHCO₃ was tested. Metrohm 905 Titrando potentiometric titrator was used. The positive electrode active material was dissolved in deionized water, the aqueous solution of the positive electrode active material was titrated with a standard titration solution. Every time when 0.1 ml of the standard titration solution was added dropwise, the potential or pH value was recorded, and the titration was stopped when the potential or pH value did not change much. The volume of the standard titration solution added dropwise and the measured potential or pH value were recorded, and the end point of titration was determined by plotting or second-time derivative, from which the titration volume of the titration standard solution was determined. The content in percentage by weight obtained by the calculated weight of NaHCO₃ dividing the weight of the positive electrode active material was used as the content of residual alkali NaHCO₃ in the positive electrode active material.

### 2. Performance test of positive electrode plate

### 1) Compaction density

According to an embodiment of this application, the compaction density PD of the positive electrode film layer was determined by measuring the weight of the single-sided positive electrode film layer per unit area (g/cm²) and the thickness (cm) of the single-sided positive electrode film (the number of collected points was > 14). Specifically, the compaction density PD of the positive electrode plate = the weight of the single-sided positive electrode film layer per unit area (g/cm²)/thickness of the single-sided positive electrode film layer (cm).

### 2) Electrode plate resistance

Dried positive electrode film layers were cut from the left, middle, and right positions of the positive electrode plate, and cut into small discs with a diameter of 3 mm. The electrode plate resistance tester from Initial Energy Science & Technology Co., Ltd was powered on, the disc was placed at an appropriate position on the "probe" of the electrode plate resistance tester, and the "start" button was clicked. The reading was recorded after it was stable. Each small disc was tested at two positions, and finally the average of six measurements was calculated and used as the electrode plate resistance of the electrode plate.

### 3. Battery performance test

### 1) First-cycle discharge capacity test

The first-cycle discharge capacity was tested as follows. At 25°C, the prepared battery was charged to 3.75 V at a constant current of 1 C, then charged at a constant voltage of 3.75 V until the current dropped to 0.05 C, and then discharged to 1.5 V at a constant current of 1 C, to obtain the first-cycle discharge capacity (Cd1).

### 2) First-cycle Coulombic efficiency test

The first-cycle Coulombic efficiency was tested as follows. At 25°C, the prepared battery was charged to 3.75 V at a constant current of 1/5 C, and then charged at a constant voltage of 3.75 V until the current dropped to 0.05 C, to obtain the first-cycle charge capacity (Cc1). Then the battery was discharged to 1.5 V at a constant current of 1/5C, to obtain the first-cycle discharge capacity (Cd1). The Coulombic efficiency was calculated according to a formula below: First-cycle Coulombic efficiency of battery = first-cycle discharge capacity (Cd1)/first-cycle charge capacity (Cc1). The test procedures for the comparative example and other examples were the same as above.

### 3. Test of a cycling capacity retention rate of a battery

The cycling capacity retention rate of the battery was tested as follows. At 25°C, the prepared battery was charged to 3.75 V at a constant current of 1 C, then charged at a constant voltage of 3.75 V until the current dropped to 0.05 C, and then discharged to 1.5 V at a constant current of 1 C, to obtain a capacity that was designated as an initial capacity (C0). The above steps were repeated for the same battery, and a discharge capacity (Cn) of the battery after an n^{th} cycle was recorded. The capacity retention rate of the battery after each cycle was Pn = Cn/C0 x 100%. A curve of the capacity retention rate versus the number of cycles of the battery was obtained with the 100 values of P1, P2,... 100 as the vertical ordinates and the corresponding number of cycles as the horizontal ordinates. During the test, the first cycle corresponds to n = 1, the second cycle corresponds to n = 2, ... and the 100^{th} cycle corresponds to n = 100. The corresponding data of the capacity retention rate of the batteries in the examples or comparative examples in Table 2 is the data measured after 100 cycles under the above test conditions, that is, the value of P100. The test procedures for the comparative example and other examples were the same as above.

### III. Analysis of test results of examples and comparative examples

In accordance with the above methods, the batteries of the examples and comparative examples were prepared, and tested for various performance parameters. The results are shown in Table 1 and Table 2 as below.

**Table 1**

| No. | Positive electrode active material | | | | | | | | |
|---|---|---|---|---|---|---|---|---|---|
| | Name | x value | R | y value | M | z value | Median particle size of positive electrode active material Dv50/um | Carbon content /% | Residual alkali content /% |
| Example 1 | Na₄Fe_{2.8}(PO₄)₂P₂O₇/C | 0 | Fe | 0.2 | / | 0.00 | 3.00 | 2.0 | 0.52 |
| Example 2 | Na₄Fe_{2.9}(PO₄)₂P₂O₇/C | 0 | Fe | 0.1 | / | 0.00 | 3.00 | 2.0 | 0.4 |
| Example 3 | Na_{3.98}Fe₃(PO₄)₂P₂O₇/C | 0.02 | Fe | 0 | / | 0.00 | 3.00 | 2.0 | 0.35 |
| Example 4 | Na_{3.98}Fe_{2.8}(PO₄)₂P₂O₇/C | 0.02 | Fe | 0.2 | / | 0.00 | 3.00 | 2.0 | 0.24 |
| Example 5 | Na_{3.9}Fe₃(PO₄)₂P₂O₇/C | 0.1 | Fe | 0 | / | 0.00 | 3.00 | 2.0 | 0.15 |
| Example 6 | Na_{3.8}Fe₃(PO₄)₂P₂O₇/C | 0.2 | Fe | 0 | / | 0.00 | 3.00 | 2.0 | 0.08 |
| Example 7 | Na_{3.95}Fe_{2.8}Mn_{0.1}(PO₄)₂P₂O₇/C | 0.05 | Fe | 0.2 | Mn | 0.10 | 3.00 | 2.0 | 0.2 |
| Example 8 | Na_{3.98}Fe_{2.8}Mn_{0.1}(PO₄)₂P₂O₇/C | 0.02 | Fe | 0.2 | Mn | 0.10 | 3.00 | 2.0 | 0.25 |
| Example 9 | Na₄Fe_{2.85}Mn_{0.05}(PO₄)₂P₂O₇/C | 0 | Fe | 0.15 | Mn | 0.05 | 3.00 | 2.0 | 0.3 |
| Example 10 | Na_{3.95}Fe_{2.8}Mn_{0.2}(PO₄)₂P₂O₇/C | 0.05 | Fe | 0.2 | Mn | 0.20 | 3.00 | 2.0 | 0.28 |
| Example 11 | Na₄Mn_{2.9}(PO₄)₂P₂O₇/C | 0 | Mn | 0.1 | / | 0.00 | 3.00 | 2.0 | 0.35 |
| Example 12 | Na_{3.98}Mn_{2.8}Co_{0.1}(PO₄)₂P₂O₇/C | 0.02 | Mn | 0.2 | Co | 0.10 | 3.00 | 2.0 | 0.15 |
| Comparative Example 1 | Na₄Fe₃(PO₄)₂P₂O₇/C | 0 | Fe | 0 | / | 0.00 | 3.00 | 2.0 | 0.6 |
| Comparative Example 2 | Na₄Fe₃(PO₄)₂P₂O₇ | 0 | Fe | 0 | / | 0.00 | 3.00 | / | 1.1 |
| Comparative Example 3 | Na₄Fe_{2.9}Mn_{0.1}(PO₄)₂P₂O₇/C | 0 | Fe | 0.1 | Mn | 0.10 | 3.00 | 2.00 | 0.3 |
| Comparative Example 4 | Na₄Fe_{2.8}Mn_{0.2}(PO₄)₂P₂O₇/C | 0 | Fe | 0.2 | Mn | 0.20 | 3.00 | 2.0 | 0.4 |
| Comparative Example 5 | Na₄Mn₃(PO₄)₂P₂O₇/C | 0 | Mn | 0 | / | 0.00 | 3.00 | 2.0 | 0.42 |

**Table 2**

| No. | Positive electrode plate | | Battery | | |
|---|---|---|---|---|---|
| | Compaction density of film layer /(g/cm³) | Electrode plate resistance /Ω•cm | First-cycle discharge capacity /mAh•g⁻¹ | First-cycle Coulombic efficiency | Capacity retention rate after 100 cycles |
| Example 1 | 1.9 | 0.6 | 110.1 | 96.50% | 96.80% |
| Example 2 | 1.9 | 0.4 | 112.2 | 97.56% | 97.20% |
| Example 3 | 1.9 | 0.3 | 111.1 | 98.30% | 98.50% |
| Example 4 | 1.9 | 0.2 | 108.5 | 97.50% | 98.80% |
| Example 5 | 1.95 | 0.1 | 105 | 97.22% | 98.90% |
| Example 6 | 1.9 | 0.1 | 104 | 97.50% | 98.80% |
| Example 7 | 1.9 | 0.3 | 111.5 | 98.11% | 97.80% |
| Example 8 | 1.9 | 0.3 | 114 | 98.70% | 97.50% |
| Example 9 | 1.9 | 0.4 | 113 | 97.41% | 97.20% |
| Example 10 | 1.9 | 0.4 | 110 | 97.34% | 97.20% |
| Example 11 | 2.1 | 0.3 | 98.5 | 98.20% | 96.80% |
| Example 12 | 2.2 | 0.1 | 97.4 | 99.30% | 98.80% |
| Comparative Example 1 | 1.9 | 0.7 | 112 | 98.10% | 95.20% |
| Comparative Example 2 | 1.8 | 1.0 | 105 | 92.90% | 93.80% |
| Comparative Example 3 | 1.9 | 0.4 | 113.2 | 98.40% | 98.40% |
| Comparative Example 4 | 1.9 | 0.5 | 112.1 | 98.20% | 97.60% |
| Comparative Example 5 | 2.1 | 0.5 | 100.1 | 96.20% | 95.60% |

According to the above results, Examples 1 to 12 all include a positive electrode active material, where the positive electrode active material is a polyanionic compound/carbon composite, and the positive electrode active material has the following general formula:

Na₄₋ₓR_{3-y}M_{z}(PO₄)₂P₂O₇/C

where R includes at least one of Mg, Al, Sc, Ti, V, Cr, Mn, Fe, Co, Ni, Cu, Zn, Zr, Nb, Mo, Sn, Hf, Ta, W, and Pb, M includes at least one of Mg, Al, Sc, Ti, V, Cr, Mn, Fe, Co, Ni, Cu, Zn, Zr, Nb, Mo, Sn, Hf, Ta, Si, W, and Pb, 0≤x≤0.5, 0≤y≤0.5, 0≤z<x+y, and x and y are not both 0.

From the comparison of Examples 1 to 10 with Comparative Example 1, and Examples 11 and 12 with Comparative Example 5, it can be seen that compared with the traditional positive electrode active material, the positive electrode active material including the polyanionic compound/carbon composite in the examples of this application can further reduce the content of residual alkali in the positive electrode active material, improve the processability of the positive electrode active material, reduce the electrode plate resistance of the positive electrode plate, and improve the cycling performance of the battery while maintaining a high discharge capacity and Coulombic efficiency of the positive electrode active material, by providing a Na vacancy, a Fe vacancy or a Mn vacancy.

It can be seen from Examples 1 to 6 that the presence of the sodium vacancy and/or iron vacancy can significantly reduce the content of residual alkali in the positive electrode active material, so that the battery has a high cycling capacity retention rate. By controlling 0<x≤0.2 and/or 0<y-z≤0.3, the content of sodium vacancy and iron vacancy can be controlled, so that the positive electrode active material maintains both a high discharge capacity and a high Coulombic efficiency.

From the comparison of Examples 1 to 6 with Comparative Example 2, it can be seen that compared with a polyanionic compound containing no carbon, the positive electrode active material in the examples of this application is a polyanionic compound/carbon composite, which can provide a Na vacancy or a Fe vacancy, to reduce the content of residual alkali in the positive electrode active material and the electrode plate resistance of the positive electrode plate, improve the compaction density of the positive electrode film layer, and improve the first-cycle Coulombic efficiency and capacity retention rate after 100 cycles of the battery, thereby improving the performance of the battery.

From the comparison of Examples 7 and 8 with Comparative Example 3 and Example 10 with Comparative Example 4, it can be seen that compared with the traditional iron-based polyanionic compound doped with Mn, the positive electrode active material in the examples of this application can provide a Na vacancy or a Fe vacancy, to reduce the content of residual alkali in the positive electrode active material and the electrode plate resistance of the positive electrode plate.

It can be seen from the comparison of Example 12 with Comparative Example 5 that compared with the traditional manganese-based polyanionic compound, the polyanionic compound in the positive electrode active material in the examples of this application is doped with manganese, and the positive electrode active material can provide a Na vacancy or a Mn vacancy, to reduce the content of residual alkali in the positive electrode active material and the electrode plate resistance of the positive electrode plate, improve the compaction density of the positive electrode film layer, and improve the first-cycle Coulombic efficiency and capacity retention rate after 100 cycles of the battery, thereby improving the performance of the battery.

From the comparison of Example 4 with Example 3, it can be seen that both Na vacancy and Fe vacancy are provided in the examples of this application, which further reduce the content of residual alkali in the positive electrode active material and the electrode plate resistance of the positive electrode plate, and improve the capacity retention rate of the battery after 100 cycles.

It can be seen from the comparison of Example 8 with Example 4 that the polyanionic compound in the positive electrode active material in the examples of this application is doped with manganese, which further improves the first-cycle discharge capacity and first-cycle Coulombic efficiency of the battery.

It should be noted that this application is not limited to the embodiments above. The above-described embodiments are merely exemplary, and embodiments having substantially the same technical idea and the same effects within the scope of the technical solution of this application are all included in the technical scope of this application. In addition, other embodiments constructed by applying various modifications conceivable to those skilled in the art to the embodiments and combining some of the constituent elements of the embodiments without departing from the scope of the essence of this application are also included in the scope of this application.

## Claims

1. A positive electrode active material, wherein the positive electrode active material is a polyanionic compound/carbon composite, and the positive electrode active material has the following general formula:
Na₄₋ₓR_{3-y}M_{z}(PO₄)₂P₂O₇/C
wherein R comprises at least one of Mg, Al, Sc, Ti, V, Cr, Mn, Fe, Co, Ni, Cu, Zn, Zr, Nb, Mo, Sn, Hf, Ta, W, and Pb, M comprises at least one of Mg, Al, Sc, Ti, V, Cr, Mn, Fe, Co, Ni, Cu, Zn, Zr, Nb, Mo, Sn, Hf, Ta, Si, W, and Pb, 0≤x≤0.5, 0≤y≤0.5, 0≤z<x+y, and x and y are not both 0.

2. The positive electrode active material according to claim 1, wherein 0≤x≤0.5, and optionally 0.01≤x≤0.2.

3. The positive electrode active material according to claim 1 or 2, wherein 0<y-z≤0.3.

4. The positive electrode active material according to claim 1 or 2, wherein 0<x≤0.5 and 0<z≤y≤0.5.

5. The positive electrode active material according to any one of claims 1 to 4, wherein R comprises one or more of Fe, Co, Ni, and Mn; and M comprises one or more of Mg, Al, Sc, Ti, V, Cr, Mn, Si, and Co.

6. The positive electrode active material according to any one of claims 1 to 5, wherein a median particle size Dᵥ50 of the positive electrode active material is 1.0 µm ≤ Dᵥ50 ≤ 10 µm and optionally 1.5 µm to 5.0 µm.

7. The positive electrode active material according to any one of claims 1 to 6, wherein
based on a total weight of the positive electrode active material, based on a total weight of the positive electrode active material, a content of residual alkali NaHCO₃ in the positive electrode active material is 0.05% to 2.5% and optionally 0.05% to 0.5%.

8. A method for preparing a positive electrode active material, comprising the following steps:
dissolving raw materials comprising a sodium source, an R source, a phosphorus source, and a carbon source in deionized water and mixing uniformly to obtain a mixed slurry, wherein optionally, the raw materials further comprise an M source; and
drying and then calcining the mixed slurry to prepare the positive electrode active material, wherein the positive electrode active material is a polyanionic compound/carbon composite, and the positive electrode active material has the following general formula:
Na₄₋ₓR_{3-y}M_{z}(PO₄)₂P₂O₇/C
wherein R comprises at least one of Mg, Al, Sc, Ti, V, Cr, Mn, Fe, Co, Ni, Cu, Zn, Zr, Nb, Mo, Sn, Hf, Ta, W, and Pb, M comprises at least one of Mg, Al, Sc, Ti, V, Cr, Mn, Fe, Co, Ni, Cu, Zn, Zr, Nb, Mo, Sn, Hf, Ta, Si, W, and Pb, 0≤x≤0.5, 0≤y≤0.5, 0≤z<x+y, and x and y are not both 0.

9. The preparation method according to claim 8, wherein 0<y-z≤0.3.

10. The preparation method according to claim 8 or 9, wherein the drying and then calcining the mixed slurry comprise the following steps:
drying the mixed slurry to obtain a precursor powder; and
calcining the precursor powder at a calcination temperature of 400°C to 650°C for a calcination time of 5 h to 15 h to prepare the positive electrode active material.

11. The preparation method according to claim 10, wherein the calcination temperature is 500°C to 600°C.

12. The preparation method according to claim 10 or 11, wherein the calcination time is 8 h to 13 h.

13. The preparation method according to any one of claims 8 to 12, wherein the R source comprises one or more of a magnesium source, an aluminum source, a scandium source, a titanium source, a vanadium source, a chromium source, a manganese source, an iron source, a cobalt source, a nickel source, a copper source, a zinc source, a zirconium source, a niobium source, a molybdenum source, a tin source, a hafnium source, a tantalum source, a tungsten source, and a lead source.

14. The preparation method according to any one of claims 8 to 13, wherein the M source comprises one or more of a magnesium source, an aluminum source, a scandium source, a titanium source, a vanadium source, a chromium source, a manganese source, an iron source, a cobalt source, a nickel source, a copper source, a zinc source, a zirconium source, a niobium source, a molybdenum source, a tin source, a hafnium source, a tantalum source, a silicon source, a tungsten source, and a lead source.

15. The preparation method according to claim 13 or 14, wherein the iron source comprises one or more of ferrous oxalate, ferric nitrate, ferrous sulfate, ferrous chloride, ferric oxalate, ferric acetate, ferric oxide, ferrous oxide, and metallic iron.

16. A positive electrode plate, comprising a positive electrode film layer, wherein the positive electrode film layer comprises a binder, at least one of a one-dimensional conductive material and a zero-dimensional conductive material, and the positive electrode active material according to any one of claims 1 to 7 or a positive electrode active material prepared by the preparation method according to any one of claims 8 to 15.

17. The positive electrode plate according to claim 16, wherein based on a total weight of the positive electrode film layer, a content in percentage by weight of the binder is 1.5% to 3%, and optionally 2.0% to 2.5%.

18. The positive electrode plate according to claim 16 or 17, wherein the one-dimensional conductive material comprises one or more of a single-walled carbon nanotube and a multi-walled carbon nanotube; and/or
based on the total weight of the positive electrode film layer, a content in percentage by weight of the one-dimensional conductive material is 0.2% to 1% and optionally 0.5% to 0.9%.

19. The positive electrode plate according to any one of claims 16 to 18, wherein the zero-dimensional conductive material comprises one or more of Super P, Ketjen black, and acetylene black, and/or
based on the total weight of the positive electrode film layer, a content in percentage by weight of the zero-dimensional conductive material is 1% to 3% and optionally 2% to 2.8%.

20. A secondary battery, comprising the positive electrode plate according to any one of claims 16 to 19.

21. The secondary battery according to claim 20, wherein the secondary battery is a negative electrode sodium-free secondary battery.

22. The secondary battery according to claim 20 or 21, wherein the secondary battery further comprises a negative electrode plate, the negative electrode plate comprises a negative electrode current collector and a base coating layer disposed on at least one surface of the negative electrode current collector, and the base coating layer comprises one or more of carbon nanotubes, graphite, graphene, silver/carbon composite nanoparticles, and tin/carbon composite nanoparticles.

23. The secondary battery according to claim 22, wherein the base coating layer has an areal density of 5 g/m2 to 50 g/m2.

24. The secondary battery according to claim 22 or 23, wherein the base coating layer has a thickness of 2 µm to 100 µm.

25. A power consuming apparatus, comprising the secondary battery according to any one of claims 20 to 24.
